(19) Europäisches Patentamt / European Patent Office / Office européen des brevets

(11) **EP 4 040 349 A1**

(12) **EUROPEAN PATENT APPLICATION**
published in accordance with Art. 153(4) EPC

(43) Date of publication:
**10.08.2022  Bulletin 2022/32**

(21) Application number: **20946328.0**

(22) Date of filing: **24.11.2020**

(51) International Patent Classification (IPC):
$G06N\ 20/00$ (2019.01)        $G06N\ 5/02$ (2006.01)
$G06T\ 19/00$ (2011.01)        $G06T\ 7/187$ (2017.01)
$G06T\ 7/11$ (2017.01)        $G06T\ 5/00$ (2006.01)
$G06T\ 19/20$ (2011.01)

(86) International application number:
**PCT/KR2020/016741**

(87) International publication number:
**WO 2022/019390 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.07.2020  KR 20200091759**

(71) Applicant: **Urbanbase Inc.**
**Seoul (KR)**

(72) Inventors:
• **KIM, Soo Min**
  **Seoul 03916 (KR)**
• **BAEK, Yun Ah**
  **Anyang-si Gyeonggi-do 14070 (KR)**

(74) Representative: **BCKIP**
**Siegfriedstraße 8**
**80803 München (DE)**

(54) **DEVICE AND METHOD FOR TRAINING OBJECT ANALYSIS MODEL ON BASIS OF DATA AUGMENTATION**

(57)   Disclosed is a data augmentation-based object analysis model learning apparatus including one or more processors, wherein the operation performed by the processor includes acquiring a first space image including a first object image and generating a second space image by changing pixel information included in the first space image, specifying a bounding box in a region including the first object image in the first space image and labeling a first class specifying the first object image in the bounding box, and primarily learning a weight of a model designed based on a predetermined object detection algorithm, for deriving a correlation between the first object image in the bounding box and the first class, by inputting the first space image to the model, specifying an object image included in a space image based on the correlation.

FIG 1

| Space Classification | Object Detection | Preference Analysis | Product Recommendation |

EP 4 040 349 A1

**Description**

## BACKGROUND OF THE INVENTION

### Field of the Invention

The present disclosure relates to a data augmentation-based object analysis model learning apparatus and method.

### Discussion of the Related Art

According to the Korea Internet & Security Agency (KISA), the size of a domestic online shopping market aggregated in 2019 is about 133 trillion won, showing a growth of about 20% compared to 111 trillion won in 2018. As a growth rate of an online shopping market increases sharply, the number of stores and products registered on an online shopping platform has rapidly increased, and a ratio of consumers purchasing products through online stores rather than offline stores has significantly increased.

In an offline shopping type, consumers select a store and visually check products in a store to purchase the product they like, whereas in an online shopping type, consumers search for and purchase a product through keywords of the product they want. As the platform on which products are sold changes, a form in which consumers find products has also changed.

Accordingly, in online shopping, it has become very important to properly set keywords related to products so that consumer traffic can flow to product pages. However, since it is difficult to set keywords for each product in a situation in which there are more than 400 million products uploaded to the top 10 online shopping malls in Korea, there has been a need for a solution for setting keywords for products only with image files for the products in the online shopping mall.

In this case, elements constituting an image of a product may be broadly divided into a space, an object, an atmosphere, and color. A buyer also considers the use of a space in which a product is used, the product itself, the atmosphere of the space, and the color of the product as important factors when searching for a product, and thus searches for the product by combining keywords of any one of a space, an object, an atmosphere, and color which are the elements constituting the image of the product.

As such, in a situation in which a solution for automatically extracting keywords for a space, an object, an atmosphere, and color from a product image is required, representative technologies that can be introduced include object detection algorithms using artificial intelligence. In order to accurately classify a space, an object, an atmosphere, and color from a product image, there are many factors to consider, such as data quality, data quantity, a labeling method, and ease of learning. Thus, there is a need for a technology for generating a model with accurate performance while generating various learning data and facilitating learning of an artificial intelligence model.

## SUMMARY OF THE INVENTION

An object of an embodiment of the present disclosure is provided to a technology for generating a model for automatically classifying a class of an object included in an image from the corresponding image.

In this case, an object detection artificial intelligence algorithm as a technology used in an embodiment of the present disclosure may cause a large difference in performance the model depending on the amount and quality of learning data used in learning. In particular, in the case of artificial intelligence model learning, in order to make a model having excellent performance only with restrictive learning data, it may be possible to learn the model through learning data including variables of various environments or various situations in which the model is to be actually used. The present disclosure may propose a data augmenting technology for generating learning data to which various environments or situations in which the model is to be actually used are applied when generating a model for classifying a style indicated by a space image.

There is a problem in that it takes a very long time to label each class of objects included in the space image as the amount of the data increases. Accordingly, an embodiment of the present disclosure proposes a technology for automatically performing data cleansing and learning processes by automatically labeling a class for augmented learning data through a primarily learned model.

However, the technical problems solved by the embodiments may not be limited to the above technical problems and may be variously expanded without are departing from the spirit and scope of the present disclosure.

In accordance with an aspect of the present disclosure, the above and other objects can be accomplished by the provision of a data augmentation-based object analysis model learning apparatus including one or more memories configured to store instructions for performing a predetermined operation, and one or more processors operatively connected to the one or more memories and configured to execute the instructions, wherein the operation performed by the processor includes acquiring a first space image including a first object image and generating a second space image by changing pixel information included in the first space image, specifying a bounding box in a region including the first object image in the first space image and labeling a first class specifying the first object image in the bounding box, primarily learning a weight of a model designed based on a predetermined object detection algorithm, for deriving a correlation between the first object image in the bounding box and the first class, by inputting the first space image to the model, specifying an object image included in a space image based on the correlation, and generating a model for determining a class, inputting the second space image to the primarily learned model and labeling the bounding box specifying a second object image in the second space image by the model and a second class determined with respect to the second object image by the model, to the second space image, and generating a model for secondarily learning the weight of the model based on the second space image.

The operation may further include generating a set for storing a plurality of classes specifying object information, and the labeling may include outputting the set to receive selection of the first class specifying the first object image and labeling the first class to the bounding box when a bounding box is specified in a region of the first object image in the first space image.

The generating the secondarily learned model may include secondarily learning a weight of a model, for deriving a correlation between the second object image and the second class, by inputting the second space image to the primarily learned model, specifying the object image included in a space image based on the correlation, and generating a model for determining a class.

Labeling of the second space image may include inputting the second space image to the primarily learned model, comparing a second class determined for the second object image with the first class by the model, maintaining a value of the second class when the second class and the first class are equal to each other, and correcting the value of the second class to a value equal to the first class when the second class and the first class are different from each other.

The bounding box may be set to include one object image per one bounding box and to include an entire edge region of the object image in the bounding box.

The generating the second space image may include generating the second space image by changing an element value that is greater than a predetermined reference value to a greater element value and changing an element value smaller than the reference value to a smaller element value with respect to an element value (x, y, z) configuring RGB information of the pixel information included in the first space image.

The generating the second space image includes generating the second space image from the first space image based on Equation 1 below:

[Equation 1]

$$dst(I) = round(\max(0, \min(\alpha * src(I) - \beta, 255)))$$

(src(I): element value (x, y, z) before pixel information is changed, $\alpha$: constant, $\beta$: constant, and dst(I): element value (x', y', z') after pixel information is changed).

The generating the second space image may include generating the second space image from the first space image based on Equation 2 below:

[Equation 2]

$$Y = 0.1667 * R + 0.5 * G + 0.3334 * B$$

(R: x of RGB information (x, y, z) of pixel information, G: y of GB information (x, y, z) of pixel information, B: z of GB information (x, y, z) of pixel information, and Y: element value (x', y', z') after pixel information is changed).

The generating the second space image includes generating the second space image from the first space image based on Equations 3 and 4 below:

[Equation 3]

$$dst(I) = round(\max(0, \min(\alpha * src(I) - \beta, 255)))$$

(src(I): element value (x, y, z) before pixel information is changed, α: constant, β: constant, dst(I): element value (x', y', z') after pixel information is changed)

[Equation 4]

$$Y = 0.1667 * R + 0.5 * G + 0.3334 * B$$

(R: x' of (x', y', z') of dst(I) acquired from Equation 4, G: y' of (x', y', z') of dst(I) acquired from Equation 4, B: z' of (x', y', z') of dst(I) acquired from Equation 4, and Y: element value (x", y", z") after pixel information is changed).

The generating the second space image may inlcude generating the second space image by adding noise information to some of pixel information included in the first space image.

The generating the second space image includes generating the second space image by adding noise information to pixel information of the first space image based on Equation 5 below:

[Equation 5]

$$dst(I) = round(\max(0, \min(src(I) \pm N, 255)))$$

(src(I): element value (x, y, z) before pixel information is changed, $N$: random number, dst(I): element value (x', y', z') after pixel information is changed).

The generating the second space image may include generating the second space image by calculating a value ($R_{max}$-$R_{AVG}$,$G_{max}$-$G_{AVG}$,$B_{max}$-$B_{AVG}$) by subtracting an element average value ($R_{AVG}$,$G_{AVG}$,$B_{AVG}$) of each of R, G, and B of a plurality of pixels from a maximum element value ($R_{max}$,$G_{max}$,$B_{max}$) among element values of each of R, G, and B of the plurality of pixels included in a size of an NxN matrix (N being a natural number equal to or greater than 3) including a first pixel at a center among pixels included in the first space image and, when any one of element values of the ($R_{max}$-$R_{AVG}$,$G_{max}$-$G_{AVG}$,$B_{max}$-$B_{AVG}$) is smaller than a preset value, performing an operation of blurring the first pixel.

The generating the second space image may include generating random number information based on standard Gaussian normal distribution with an average value of 0 and a standard deviation of 100 as much as a number of all pixels included in the first space image and generating the second space image into which noise is inserted by adding the random number information to each of the all pixels.

In accordance with another aspect of the present disclosure, a data augmentation-based object analysis model learning method includes acquiring a first space image including a first object image and generating a second space image by changing pixel information included in the first space image, specifying a bounding box in a region including the first object image in the first space image and labeling a first class specifying the first object image in the bounding box, primarily learning a weight of a model designed based on a predetermined object detection algorithm, for deriving a correlation between the first object image in the bounding box and the first class, by inputting the first space image to the model, specifying an object image included in a space image based on the correlation, and generating a model for determining a class, inputting the second space image to the primarily learned model and labeling the bounding box specifying a second object image in the second space image by the model and a second class determined with respect to the second object image by the model, to the second space image, and generating a model for secondarily learning the weight of the model based on the second space image.

**BRIEF DESCRIPTION OF THE DRAWINGS**

The accompanying drawings, which are included to provide a further understanding of the present disclosure and are incorporated in and constitute a part of this application, illustrate embodiment(s) of the present disclosure and together with the description serve to explain the principle of the present disclosure. In the drawings:

FIG. 1 is a diagram showing a function of classifying a class for an object included in an image using an artificial intelligence model generated by a data augmentation-based object analysis model learning apparatus according to an embodiment of the present disclosure;
FIG. 2 is a functional block diagram of a data augmentation-based object analysis model learning apparatus according to an embodiment of the present disclosure;
FIG. 3 is a flowchart of a learning method performed by a data augmentation-based object analysis learning apparatus according to an embodiment of the present disclosure;

FIG. 4 is a diagram illustrating a concept of an operation performed by a data augmentation-based object analysis learning apparatus according to an embodiment of the present disclosure;

FIG. 5 is an example diagram of an operation of generating a set for storing a plurality of classes when an object image included in a first space image is labeled;

FIG. 6 is an example diagram of a second space image generated by augmenting data by changing pixel information included in a first space image according to an embodiment;

FIG. 7A is an example diagram of a second space image generated by augmenting data by applying a gray scale to pixel information included in a first space image according to an embodiment;

FIG. 7B is an example diagram of a second space image generated by augmenting data by adding noise to some of pixel information included in a first space image according to an embodiment;

FIG. 8 is an example diagram for explaining a method of generating a second space image by identifying an edge region of an object included in a first space image and applying blur to a region that is not an edge; and

FIG. 9 is an example diagram of a second space image generated by augmenting data by adding noise information based on the Gaussian normal distribution to a first space image according to an embodiment.

## DETAILED DESCRIPTION OF THE INVENTION

The attached drawings for illustrating exemplary embodiments of the present disclosure are referred to in order to gain a sufficient understanding of the present disclosure, the merits thereof, and the objectives accomplished by the implementation of the present disclosure. The present disclosure may, however, be embodied in many different forms and should not be construed as being limited to the embodiments set forth herein; rather, these embodiments are provided so that this disclosure will be thorough and complete, and will fully convey the concept of the present disclosure to one of ordinary skill in the art. Meanwhile, the terminology used herein is for the purpose of describing particular embodiments and is not intended to limit the present disclosure.

In the following description of the present disclosure, a detailed description of known functions and configurations incorporated herein will be omitted when it may make the subject matter of the present disclosure unclear. The terms used in the specification are defined in consideration of functions used in the present disclosure, and can be changed according to the intent or conventionally used methods of clients, operators, and users. Accordingly, definitions of the terms should be understood on the basis of the entire description of the present specification.

The functional blocks shown in the drawings and described below are merely examples of possible implementations. Other functional blocks may be used in other implementations without departing from the spirit and scope of the detailed description. In addition, although one or more functional blocks of the present disclosure are represented as separate blocks, one or more of the functional blocks of the present disclosure may be combinations of various hardware and software configurations that perform the same function.

The expression that includes certain components is an open-type expression and merely refers to existence of the corresponding components, and should not be understood as excluding additional components.

It will be understood that when an element is referred to as being "on", "connected to" or "coupled to" another element, it may be directly on, connected or coupled to the other element or intervening elements may be present.

Expressions such as 'first, second', etc. are used only for distinguishing a plurality of components, and do not limit the order or other characteristics between the components.

Hereinafter, embodiments of the present disclosure will be described with reference to the accompanying drawings.

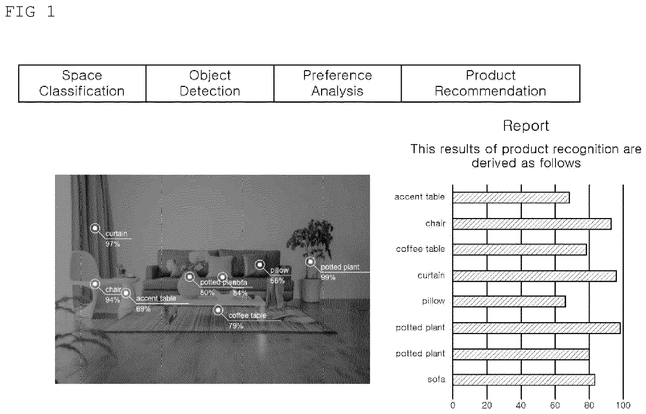

FIG. 1 is a diagram showing a function of classifying a class for an object included in an image using an artificial intelligence model generated by a data augmentation-based object analysis model learning apparatus 100 according to an embodiment of the present disclosure.

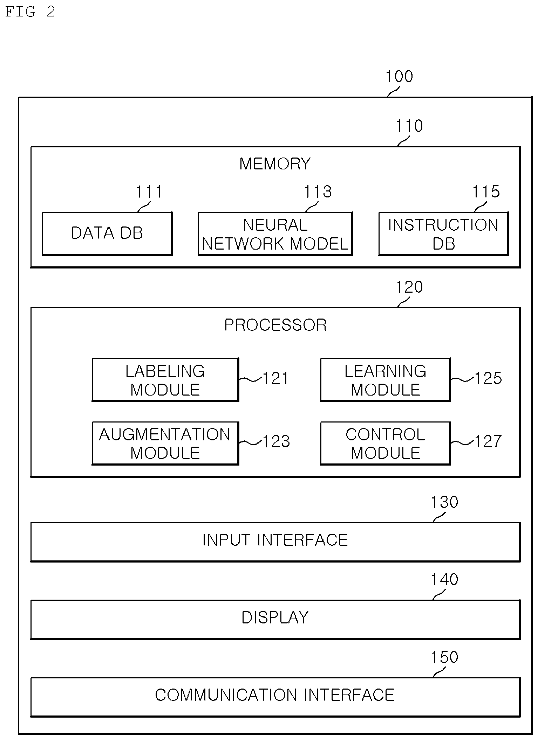

Referring to FIG. 1, the data augmentation-based object analysis model learning apparatus 100 according to an embodiment of the present disclosure may provide an object detection function among space classification, object detection, preference analysis, and product recommendation functions of an upper menu of an interface shown in FIG. 1. The data augmentation-based object analysis model learning apparatus 100 may generate an artificial intelligence model used in the interface of FIG. 1. The artificial intelligence model may analyze an input space image at a lower-left side of FIG. 1 to determine the location and name of an object included in the space image. In order to implement an embodiment, components of the data augmentation-based object analysis model learning apparatus 100 will be described with reference to FIG. 2.

FIG. 2 is a functional block diagram of the data augmentation-based object analysis model learning apparatus 100 according to an embodiment of the present disclosure.

Referring to FIG. 2, the data augmentation-based preference analysis model learning apparatus 100 according to an embodiment may include a memory 110, a processor 120, an input interface 130, a display 140, and a communication interface 150.

The memory 110 may include a learning data database (DB) 111, a neural network model 113, and an instruction DB 115.

The learning data DB 111 may include a space image file formed by photographing a space in which one object is present. The space image may be acquired through an external server or an external DB or may be acquired on the Internet. In this case, the space image may include a plurality of pixels (e.g., M*N pixels in the form of M horizontal and N vertical matrices), and each pixel may include pixel information set with RGB element values (x, y, z) representing unique colors of red (R), green (G), and blue (B).

The neural network model 113 may be an artificial intelligence model learned based on an object detection artificial intelligence algorithm for determining the location and name of an object image including a corresponding space image by analyzing an input space image. The artificial intelligence model may be generated by an operation of the processor 120 to be described and may be stored in the memory 110.

The instruction DB 115 may store instructions for performing an operation of the processor 120. For example, the instruction DB 115 may store a computer code for performing operations corresponding to operations of the processor 120, which will be described below.

The processor 120 may control the overall operation of the components of the data augmentation-based object analysis model learning apparatus 100, that is, the memory 110, the input interface 130, the display 140, and the communication interface 150. The processor 120 may include a labeling module 121, an augmentation module 123, a learning module 125, and a control module 127. The processor 120 may execute the instructions stored in the memory 110 to drive the labeling module 121, the augmentation module 123, the learning module 125, and the control module 127, and operations performed by the labeling module 121, the augmentation module 123, the learning module 125, and the control module 127 may be understood to be operations performed by the processor 120.

The labeling module 121 may specify a bounding box in a region including an object in a space image, may label a class (e.g., sofa, photo frame, book, carpet, or curtain) for specifying an object image to the bounding box to the space image, and may store this in the learning data DB 111. The labeling module 121 may acquire a space image through an external server or an external DB or may acquire a space image on the Internet.

The augmentation module 123 may generate a space image (a space image that is transformed by the augmentation module will be referred to as a "second space image") formed by changing some or all of pixel information contained in the space image (a space image that is not transformed by the augmentation module will be referred to as a "first space image") stored in the learning data DB 111 to augment the learning data and may add and store the second space image in the learning data DB 111.

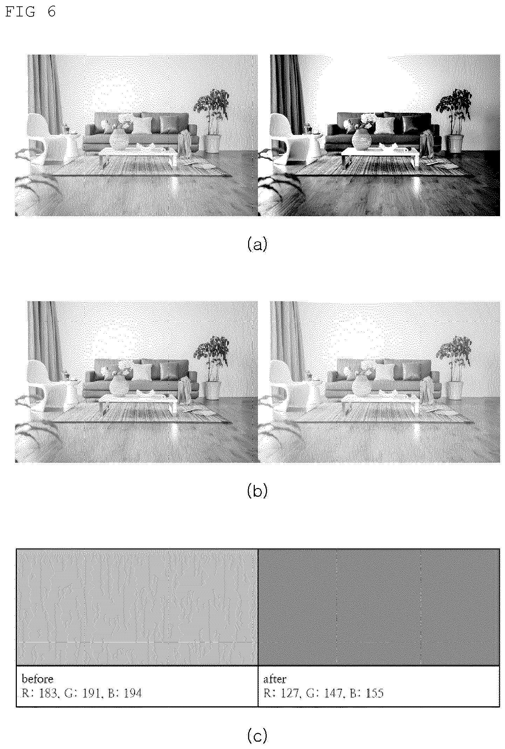

A model learned by the data augmentation-based object analysis model learning apparatus 100 according to an embodiment of the present disclosure may have a function of classifying a class of an object image included in an image. In this case, even if the space image is captured by photographing the same space, information contained in an image file may be changed by various variables due to various environments or situations in which the space image is actually generated, such as the characteristics of a camera used for photograph, a time at which photograph is performed, or a habit of a person who takes a picture. Thus, in order to improve performance of the artificial intelligence model, the amount and quality of data used for learning may be important. In particular, in order to learn variables to be generated according to the characteristics of a camera used for photograph, a time at which photograph is performed, or a habit of a person who takes a picture, the augmentation module 123 may increase the quantity of learning data through a data augmentation algorithm of FIGS. 6 to 9, which applies a variable to be actually generated with respect to one space image.

As the amount of data increases, it may take a very long time to label each class of objects included in the space image. Thus, the labeling module 121 may input a second space image to a primarily learned artificial intelligence model through a first space image to label the location (bounding box) and name of a determined object to the second space image. In this case, the labeling module 121 may input the second space image to the primarily learned model to compare a second class determined by an artificial intelligence model with a first class labeled to the original first space image, may maintain a value of the second class and may label the value of the second class to the second space image when the second class and the first class are the same, may label a value of the first class labeled to the first space image instead of the value of the second class determined by the artificial intelligence model when the second class and the first class are different from each other, and may automatically remove an outlier of the augmented learning data. Thus, the learning module 125 may secondarily learn the artificial intelligence model through the labeled second space image, and thus may automatically perform data cleansing and learning processes.

The learning module 125 may learn a weight for deriving a correlation between a space image included in learning data and a class labeled to each space image by inputting the learning data (e.g., labeled first space image or labeled second space image) to an artificial intelligence model designed based on an object detection algorithm, and thus may generate the artificial intelligence model for determining a class of a newly input space image based on the correlation of the weight.

The object detection algorithm may include a machine learning algorithm for defining various problems in an artificial intelligence field and overcoming the problem. According to an embodiment of the present disclosure, a space image may be set to be input to an input layer of an artificial intelligence model designed according to an algorithm of R-CNN, Fast R-CNN, Faster R-CNN, or SSD, and a class label labeled to the bounding box of the space image may be set to be input to an output layer, and thus may learn a weight of an artificial intelligence model for deriving a correlation between the location of a bounding box specifying an object image from the space image and a class of the image.

The artificial intelligence model may refer to the overall model having problem-solving ability, which is composed of nodes that form a network by combining synapses. The artificial intelligence model may be defined based on a learning process for updating a model parameter as a weight between layers configuring the model and an activation function for generating an output value.

The model parameter may refer to a parameter determined through learning and may include a weight of layer connection and bias of neurons. A hyper parameter may refer to a parameter to be set before learning in a machine learning algorithm and may include a learning rate, the number of repetitions, the size of mini batch, and an initialization function.

The learning objective of the artificial intelligence model may be seen as determining the model parameter for minimizing the loss function. The loss function may be used as an index to determine the optimal model parameters in a learning process of the artificial intelligence models.

The control module 127 may input a space image to the completely learned artificial intelligence model to derive the class determined by the artificial intelligence model with respect to the input space image as a keyword of an object included in the corresponding space image. Thus, the control module 127 may store keywords in a product DB of an online shopping mall server to use corresponding keyword information on a product page including an image containing a specific object.

The input interface 130 may receive user input. For example, when a class for learning data is labeled, the input interface 130 may receive user input.

The display 140 may include a hardware component that includes a display panel to output an image.

The communication interface 150 may communicate with an external device (e.g., an online shopping mall server or a user equipment) to transmit and receive information. To this end, the communication interface 150 may include a wireless communication module or a wired communication module.

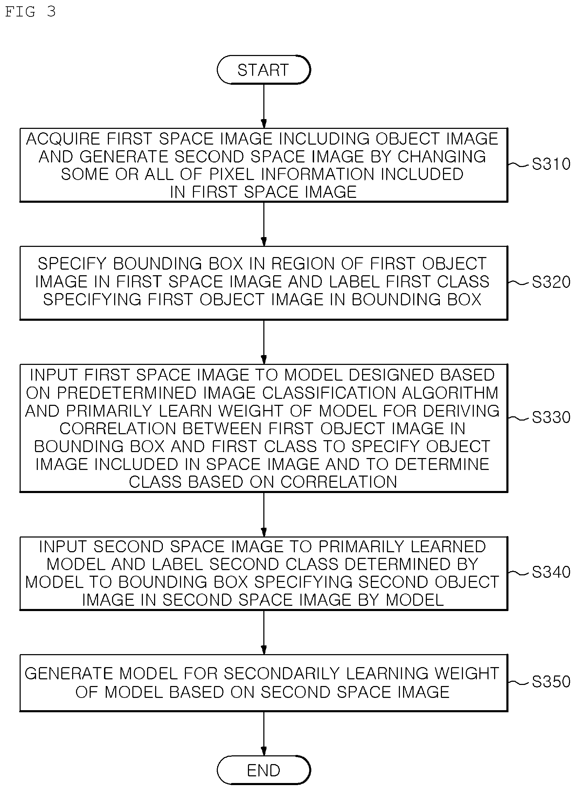

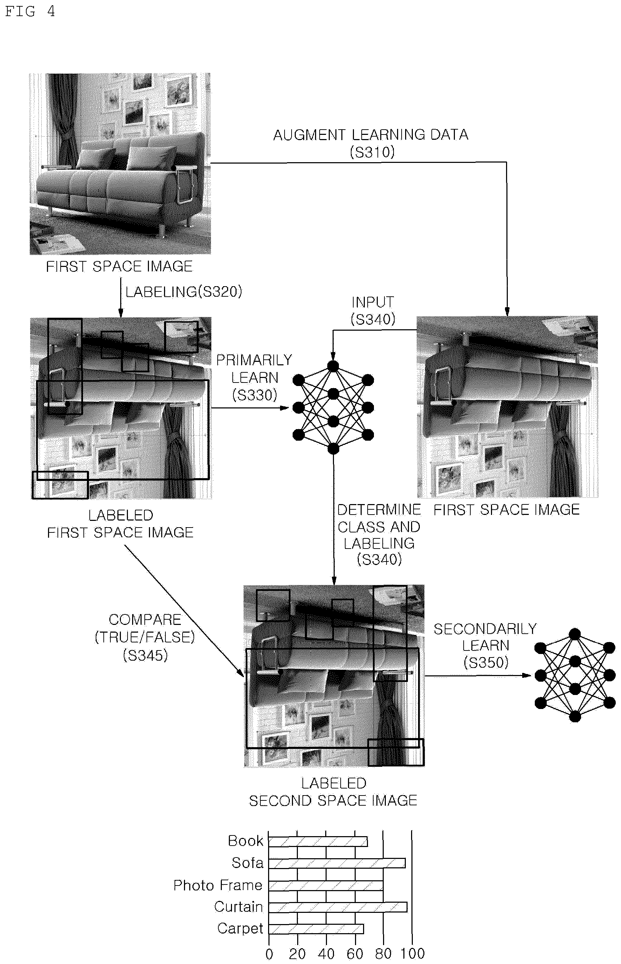

FIG. 3 is a flowchart of a learning method performed by a data augmentation-based object analysis learning apparatus according to an embodiment of the present disclosure. FIG. 4 is a diagram illustrating a concept of an operation performed by a data augmentation-based object analysis learning apparatus according to an embodiment of the present disclosure.

Referring to FIGS. 3 and 4, the augmentation module 123 may acquire a first space image including a first object image and may generate a second space image obtained by changing some or all of pixel information included in a first space image (S310). The labeling module 121 may specify a bounding box in a region including a first object image in the first space image and may label a first class for specifying the first object image in the bounding box to the first space image (S320). The learning module 125 may primarily learn a weight of an artificial intelligence model, for deriving a correlation between the location of the first object image in the bounding box from the first space image and the first class of the first object image from the first space image, by inputting the first space image labeled to the model designed based on the object detection algorithm, and thus may generate a model for specifying the location of the object image included in the s pace image and determining a class of the object image based on the learned correlation of the weight (S330). Then, the labeling module 121 may input the second space image to the primarily learned model, and thus the primarily learned artificial intelligence model may label the bounding box specifying the second object image in the second space image and the second class determined for the second object image by the primarily learned artificial intelligence model, to the second space image (S340). In this case, the labeling module 121 may input the second space image to the primarily learned model to compare a second class determined for the second object image by the artificial intelligence model with the first class, may maintain a value of the second class when the second class and the first class are the same, may correct the value of the second class to the same value as the first class when the second class and the first class are different from each other, and may correct an error of the primarily learned model to perform labeling (S345). Even if the second space image is transformed from the first space image, classes of objects included in respective images are the same, and thus outlier data may be removed by correcting the error of the primarily learned model using the above method.

Thus, the learning module 125 may perform relearning of the completely primarily learned artificial intelligence model based on the completely labeled second space image to generate a secondarily learned model with respect to a weight of the artificial intelligence model (S350). In detail, the learning module 125 may secondarily learn the weight of the artificial intelligence model, for deriving a correlation between the location of the second object image in the bounding box from the second space image and the second class of the second object image from the second space image, by inputting the second space image labeled to the primarily learned artificial intelligence model for secondary learning, and thus may specify the location of the object image included in the space image based on the correlation for the learned weight and may generate a model for determining a class of the object image.

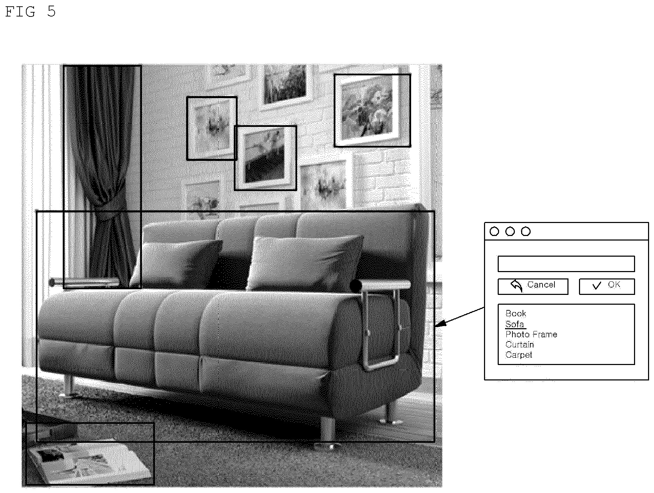

FIG. 5 is an example diagram of an operation of generating a set for storing a plurality of classes when an object image included in a first space image is labeled.

Referring to FIG. 5, a labeling module may generate a set for storing a plurality of classes (e.g., book, sofa, photo frame, curtain, or carpet) for specifying object information and may store the same in a learning data DB, and when a bounding box for specifying the first object image (e.g., a sofa of FIG. 5) in a region of the first object image in the first space image during labeling in operation S320 is specified, the labeling module may output the set (e.g., the right side of FIG. 5) stored in the learning data DB and may receive selection (e.g., selection of a right side of FIG. 5) from a user who performs labeling of the first class for specifying the first object image, and may label the first class to a region of the bounding box including the first object image to generate learning data for specifying the object image. In this case, the bounding box may be set to include one object image per one bounding box and to include an entire edge region of the object image inside the bounding box.

Hereinafter, embodiments for generating a second space image by augmenting a first space image by the data augmentation-based preference analysis model learning apparatus 100 will be described with reference to FIGS. 6 to 9.

FIG. 6 is an example diagram of a second space image generated by augmenting data by changing pixel information included in a first space image according to an embodiment.

The augmentation module 123 may perform transformation to increase contrast by making a bright part of pixels of the first space image brighter and making a dark part darker or to reduce contrast by making the bright part less bright and making the dark part less dark, and thus may generate a second space image for learning a variable for generating different images of one space depending on the performance or model of a camera.

To this end, the augmentation module 123 may generate the second space image by changing an element value that is greater than a predetermined reference value to a greater element value and changing an element value smaller than the reference value to a smaller element value with respect to the element value (x, y, z) configuring RGB information of the pixel information included in the first space image.

For example, the augmentation module 123 may generate the second space image, pixel information of which is changed by applying Equation 1 below, with respect to pixel information of all pixels of the first space image.

[Equation 1]

$$dst(I)=round(\max(0,\min(\alpha * src(I)-\beta,255)))$$

(src(I): element value (x, y, z) before pixel information is changed, $\alpha$: constant, $\beta$: constant, and dst(I): element value (x', y', z') after pixel information is changed)

According to Equation 1 above, when $\alpha$ is set to have a greater value than 1, contrast may be increased by making a bright part of pixels of the first space image brighter and making a dark part darker among pixels in the first space image, and when $\alpha$ is set to have a value greater than 0 and smaller than 1, contrast may be reduced by making the bright part less bright and making the dark part less dark among the pixels in the first space image.

Since an element value of R, G, and B generally has a value between 0 and 255, $\beta$ may be set to prevent the element value output based on $\alpha$ from being excessively greater than 255 and may be set to prevent the maximum value from being greater than 255 using a min function.

Since an element value of R, G, and B generally has a value between 0 and 255, a max function may be used to prevent the element value based on $\beta$ from being smaller than 0 using the max function.

When $\alpha$ is set to a value having a decimal point, a round function may be used in such a way that the element value of the changed pixel information becomes an integer.

Referring to FIG. 6A, a left side shows the first space image, and the right side shows the second space image when Equation 1 is applied with settings of $\alpha$**-2.5,**$\beta$**:330**. As seen from the second space image of the right side of FIG. 6A, new learning data with increased contrast may be generated by changing a bright part to be brighter and changing a dark part to be darker, compared with the first space image.

Referring to FIG. 6B, a left side shows the first space image, and the right side shows the second space image when Equation 1 is applied with settings of **a:0.8,**$\beta$**:50**. As seen from the second space image of the right side of FIG. 6B, new learning data with reduced contrast may be generated by changing a bright part to be less bright and changing a dark part to be less dark, compared with the first space image.

Referring to FIG. 6C, a left side shows the first space image formed with one color (R, G, B) = (183, 191, 194), and the right side shows the second space image when Equation 1 is applied with settings of $\alpha$**:2.5,**$\beta$**:330**. A degree by which information on one pixel changes based on Equation 2 may be seen from FIG. 6C.

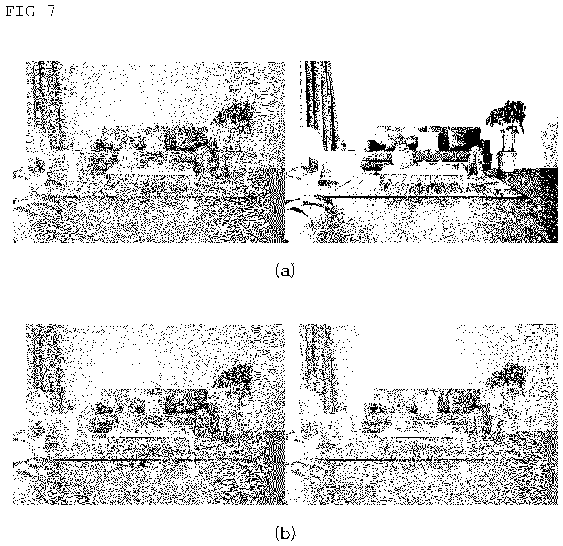

FIG. 7A is an example diagram of a second space image generated by augmenting data by applying a gray scale to pixel information included in a first space image according to an embodiment.

Since determination of a class of a space image is largely affected by arrangement of objects or patterns of the objects, the augmentation module 123 may convert colors to monotonous color and then may generate learning data to which a variable is applied to appropriately learn the arrangement of the objects and the patterns of the objects.

To this end, as shown in a left image of FIG. 7A, the augmentation module 123 may generate the second space image in which the arrangement and the pattern are revealed while pixel information has a monotonous color by applying Equation 2 below for pixel information for all pixels of the first space image.

[Equation 2]

$$Y = 0.1667 * R + 0.5 * G + 0.3334 * B$$

(R: x of RGB information (x, y, z) of pixel information, G: y of GB information (x, y, z) of pixel information, B: z of GB information (x, y, z) of pixel information, and Y: element value (x', y', z') after pixel information is changed)

In addition, as shown in a right image of FIG. 7A, the augmentation module 123 may generate the second space image in which the arrangement and pattern of objects included in the first space image are clearly revealed by applying Equation 4 below to a derived element value after increasing contrast of the first space image through Equation 3 below.

[Equation 3]

$$dst(I) = round(\max(0, \min(\alpha * src(I) - \beta, 255)))$$

(src(I): element value (x, y, z) before pixel information is changed, $\alpha$: constant, $\beta$: constant, dst(I): element value (x', y', z') after pixel information is changed)

[Equation 4]

$$Y = 0.1667 * R + 0.5 * G + 0.3334 * B$$

(R: x' of (x', y', z') of dst(I) acquired from Equation 4, G: y' of (x', y', z') of dst(I) acquired from Equation 4, B: z' of (x', y', z') of dst(I) acquired from Equation 4, and Y: element value (x", y", z") after pixel information is changed)

FIG. 7B is an example diagram of a second space image generated by augmenting data by adding noise to some of pixel information included in a first space image according to an embodiment.

The augmentation module 123 may generate learning data for learning the case in which noise is generated in an image captured based on enlargement of a camera. To this end, the augmentation module 123 may add noise information to some of the pixel information included in the first space image to generate the second space image. For example, the augmentation module 123 may generate the second space image to which noise information is added by generating arbitrary coordinate information through an algorithm for generating a random number, selecting some coordinates of pixels included in the first space image, and adding the random number, calculated using the algorithm for generating a random number, to the pixel information based on Equation 5 with respect to an element value of a pixel of the selected coordinates.

[Equation 5]

$$dst(I) = round(\max(0, \min(src(I) \pm N, 255)))$$

(src(I): element value (x, y, z) before pixel information is changed, *N*: random number, dst(I): element value (x', y', z') after pixel information is changed)

**EP 4 040 349 A1**

As seen from FIG. 7B, a left side shows a first space image, and a right side shows a second space image when noise is added based on Equation 5.

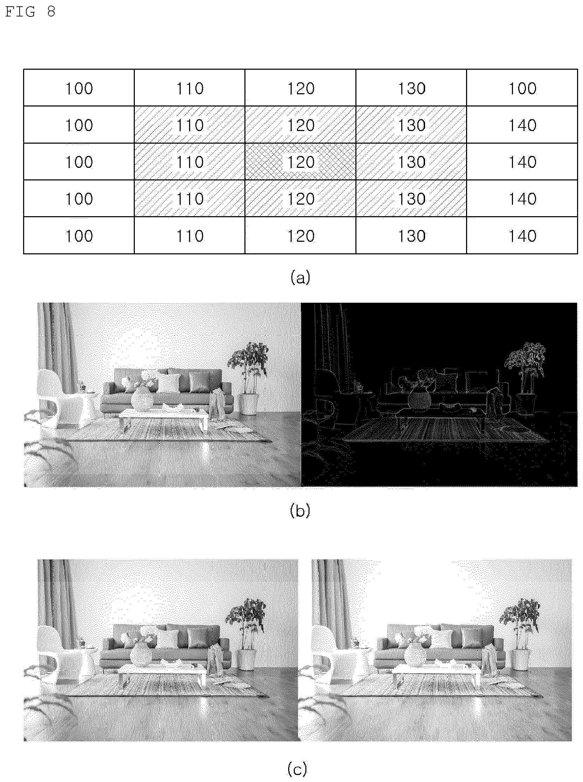

FIG. 8 is an example diagram for explaining a method of generating a second space image by identifying an edge region of an object included in a first space image and applying blur to a region that is not an edge.

The augmentation module 123 may generate the second space image in which the edge of the object seems to be blurred to learn an image captured when a camera is not in focus according to the following embodiment.

FIG. 8A illustrates an example in which each pixel area is identified assuming a first space image including 25 pixels in the form of a matrix of 5 horizontal lines x 5 vertical lines for convenience of explanation. In this case, each pixel has element values of R, G, and B, but an embodiment will be described based on an element value of R (Red). A number denoted in each pixel region of FIG. 8A may refer to an element value of R.

In FIG. 8A, an operation described below may be performed on all pixels, but for convenience of description, the operation will be described based on a pixel at the center. In FIG. 8A, the augmentation module 123 may identify an edge of an object included in the first space image as shown in the right side of FIG. 8B by calculating a difference (R_max - R_avg = 10) between a maximum value (R_max = 130) of an R element value and an average value (R_avg = 120) of the R element value among pixels included in an NxN region (in FIG. 8A, N is assumed to be 3) centered on the pixel on which the operation is performed and distinguish between a pixel (which is determined as a pixel present in a region inside an object), a derived value of which is smaller than a preset value n, and a pixel (which is determined as a pixel present in an edge region of the object), a derived value of which is greater than a preset value n. Here, the augmentation module 123 may generate an image shown in a right side of FIG. 8C by applying the Gaussian blur algorithm to only a pixel of a region except for the edge region. When there is a region (e.g., an edge of an image) without a pixel in an NxN region based on a pixel on which the operation is performed, the aforementioned operation may be omitted, and the corresponding pixel may be blurred.

As such, the augmentation module 123 may perform the above operation on each of all pixels included in the first space image. In the case of the pixel on which the operation is performed, the second space image may be generated by selecting a plurality of pixels included in the size of an NxN (N is an odd number of 3 or more) matrix including the corresponding pixel in the center as the kernel region, calculating a value ($R_{max}-R_{AVG}, G_{max}-G_{AVG}, B_{max}-B_{AVG}$) by subtracting an element average value ($R_{AVG}, G_{AVG}, B_{AVG}$) of each of R, G, and B of a plurality of pixels included in the kernel region from the maximum element value ($R_{max}, G_{max}, B_{max}$) among element values of each of R, G, and B of the plurality of pixels included in the kernel region, and applying the Gaussian blur algorithm to the corresponding pixel when at least one element value of ($R_{max}-R_{AVG}, G_{max}-G_{AVG}, B_{max}-B_{AVG}$) is smaller than a preset value n.

When the operation is performed on all pixels included in the first space image, only pixels of the edge region with a large color difference may have pixel information without change, the pixels in the region without color difference may be blurred, and thus the second space image based on which an image captured while the camera is out of focus may be generated. In this case, the Gaussian blur algorithm may be applied for blur processing, but the present disclosure is not limited thereto, and various blur filters may be used.

Referring to FIG. 8B, a left side shows a first space image, and a right side shows an image generated by distinguishing between a pixel having a derived value greater than a preset value n and a pixel having a derived value smaller than n in the embodiment described in FIG. 8. An edge of an object is also clearly revealed in the right image of FIG. 8B, and thus learning data may be added and used to clearly recognize the arrangement and patterns of the object.

Referring to FIG. 8C, a left side shows a first space image, and a right side shows a second space image in which a region except for an edge is blurred in an embodiment formed by applying N = 7 and n = 20 to the aforementioned embodiment of FIG. 8.

In the embodiment described with reference to FIG. 5, the second space image for achieving an opposite effect to the aforementioned embodiment by blurring a pixel having a derived value greater than a preset value n may also be applied to the learning data DB 111.

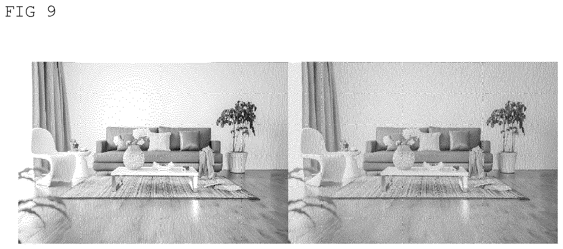

FIG. 9 is an example diagram of a second space image generated by augmenting data by adding noise information based on the Gaussian normal distribution to a first space image according to an embodiment.

The augmentation module 123 may generate learning data for learning the case in which a specific part of an image is out of focus. To this end, the augmentation module 123 may generate random number information based on the standard Gaussian normal distribution with an average value of 0 and a standard deviation of 100 as much as the number of all pixels included in the first space image and may generate the second space image into which noise information is inserted by adding random number information to each of the all pixels.

An embodiment of the present disclosure may provide an object detection model for easy learning and improved performance by ensuring high-quality learning data while increasing the amount of learning data through a data augmentation technology for ensuring various learning data by transforming original learning data to learn a variable indicating that a generated image is changed depending on various environments or situations such as the characteristics of a photographing camera, a photographing time, and a habit of a photographing person even if the same space is photographed and automating labeling of augmented learning data.

In addition, a class for augmented learning data may be automatically labeled through a primarily learned model, and thus a problem in that it takes a long time to label each class of objects included in the space image as the amount of the data increases.

Accordingly, when the image classification model according to the present disclosure is used, an online shopping mall may effectively introduce traffic of consumers to a product page using a keyword related to a product only with an image of the product, and the consumers may also search for a keyword required therefor and may use the keyword in search using a wanted image.

Various effects that are directly or indirectly identified through the present disclosure may be provided.

The embodiments of the present disclosure may be achieved by various means, for example, hardware, firmware, software, or a combination thereof.

In a hardware configuration, an embodiment of the present disclosure may be achieved by one or more application specific integrated circuits (ASICs), digital signal processors (DSPs), digital signal processing devices (DSDPs ), programmable logic devices (PLDs), field programmable gate arrays (FPGAs), processors, controllers, microcontrollers, microprocessors, etc.

In a firmware or software configuration, an embodiment of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

Combinations of blocks in the block diagram attached to the present disclosure and combinations of operations in the flowchart attached to the present disclosure may be performed by computer program instructions. These computer program instructions may be installed in an encoding processor of a general purpose computer, a special purpose computer, or other programmable data processing equipment, and thus the instructions executed by an encoding processor of a computer or other programmable data processing equipment may create means for perform the functions described in the blocks of the block diagram or the operations of the flowchart. These computer program instructions may also be stored in a computer-usable or computer-readable memory that may direct a computer or other programmable data processing equipment to implement a function in a particular method, and thus the instructions stored in the computer-usable or computer-readable memory may produce an article of manufacture containing instruction means for performing the functions of the blocks of the block diagram or the operations of the flowchart. The computer program instructions may also be mounted on a computer or other programmable data processing equipment, and thus a series of operations may be performed on the computer or other programmable data processing equipment to create a computerexecuted process, and it may be possible that the computer program instructions provide the blocks of the block diagram and the operations for performing the functions described in the operations of the flowchart.

Each block or each step may represent a module, a segment, or a portion of code that includes one or more executable instructions for executing a specified logical function. It should also be noted that it is also possible for functions described in the blocks or the operations to be out of order in some alternative embodiments. For example, it is possible that two consecutively shown blocks or operations may be performed substantially and simultaneously, or that the blocks or the operations may sometimes be performed in the reverse order according to the corresponding function.

As such, those skilled in the art to which the present disclosure pertains will understand that the present disclosure may be embodied in other specific forms without changing the technical spirit or essential characteristics thereof. Therefore, it should be understood that the embodiments described above are illustrative in all respects and not restrictive. The scope of the present disclosure is defined by the following claims rather than the detailed description, and all changes or modifications derived from the meaning and scope of the claims and their equivalent concepts should be construed as being included in the scope of the present disclosure.

**Claims**

1. A data augmentation-based object analysis model learning apparatus comprising:

   one or more memories configured to store instructions for performing a predetermined operation; and
   one or more processors operatively connected to the one or more memories and configured to execute the instructions,
   wherein the operation performed by the processor includes:

   acquiring a first space image including a first object image and generating a second space image by changing pixel information included in the first space image;
   specifying a bounding box in a region including the first object image in the first space image and labeling a first class specifying the first object image in the bounding box;

primarily learning a weight of a model designed based on a predetermined object detection algorithm, for deriving a correlation between the first object image in the bounding box and the first class, by inputting the first space image to the model, specifying an object image included in a space image based on the correlation, and generating a model for determining a class;

inputting the second space image to the primarily learned model and labeling the bounding box specifying a second object image in the second space image by the model and a second class determined with respect to the second object image by the model, to the second space image; and

generating a model for secondarily learning the weight of the model based on the second space image.

2. The data augmentation-based object analysis model learning apparatus of claim 1, wherein:

the operation further includes generating a set for storing a plurality of classes specifying object information; and

the labeling includes outputting the set to receive selection of the first class specifying the first object image and labeling the first class to the bounding box when a bounding box is specified in a region of the first object image in the first space image.

3. The data augmentation-based object analysis model learning apparatus of claim 1, wherein the generating the secondarily learned model includes secondarily learning a weight of a model, for deriving a correlation between the second object image and the second class, by inputting the second space image to the primarily learned model, specifying the object image included in a space image based on the correlation, and generating a model for determining a class.

4. The data augmentation-based object analysis model learning apparatus of claim 1, wherein labeling of the second space image includes inputting the second space image to the primarily learned model, comparing a second class determined for the second object image with the first class by the model, maintaining a value of the second class when the second class and the first class are equal to each other, and correcting the value of the second class to a value equal to the first class when the second class and the first class are different from each other.

5. The data augmentation-based object analysis model learning apparatus of claim 1, wherein the bounding box is set to include one object image per one bounding box and to include an entire edge region of the object image in the bounding box.

6. The data augmentation-based object analysis model learning apparatus of claim 1, wherein the generating the second space image includes generating the second space image by changing an element value that is greater than a predetermined reference value to a greater element value and changing an element value smaller than the reference value to a smaller element value with respect to an element value (x, y, z) configuring RGB information of the pixel information included in the first space image.

7. The data augmentation-based object analysis model learning apparatus of claim 6, wherein the generating the second space image includes generating the second space image from the first space image based on Equation 1 below:

[Equation 1]

$$dst(I) = round(\max(0, \min(\alpha * src(I) - \beta, 255)))$$

(src(I): element value (x, y, z) before pixel information is changed, $\alpha$: constant, $\beta$: constant, and dst(I): element value (x', y', z') after pixel information is changed).

8. The data augmentation-based object analysis model learning apparatus of claim 1, wherein the generating the second space image includes generating the second space image from the first space image based on Equation 2 below:

[Equation 2]

$$Y=0.1667*R+0.5*G+0.3334*B$$

(R: x of RGB information (x, y, z) of pixel information, G: y of GB information (x, y, z) of pixel information, B: z of GB information (x, y, z) of pixel information, and Y: element value (x', y', z') after pixel information is changed).

9. The data augmentation-based object analysis model learning apparatus of claim 1, wherein the generating the second space image includes generating the second space image from the first space image based on Equations 3 and 4 below:

[Equation 3]

$$dst(I)=round(\max(0,\min(\alpha*src(I)\text{-}\beta,255)))$$

(src(I): element value (x, y, z) before pixel information is changed, $\alpha$: constant, $\beta$: constant, dst(I): element value (x', y', z') after pixel information is changed)

[Equation 4]

$$Y=0.1667*R+0.5*G+0.3334*B$$

(R: x' of (x', y', z') of dst(I) acquired from Equation 4, G: y' of (x', y', z') of dst(I) acquired from Equation 4, B: z' of (x', y', z') of dst(I) acquired from Equation 4, and Y: element value (x", y", z") after pixel information is changed).

10. The data augmentation-based object analysis model learning apparatus of claim 1, wherein the generating the second space image includes generating the second space image by adding noise information to some of pixel information included in the first space image.

11. The data augmentation-based object analysis model learning apparatus of claim 10, wherein the generating the second space image includes generating the second space image by adding noise information to pixel information of the first space image based on Equation 5 below:

[Equation 5]

$$dst(I)=round(\max(0,\min(src(I)\pm N,255)))$$

(src(I): element value (x, y, z) before pixel information is changed, $N$: random number, dst(I): element value (x', y', z') after pixel information is changed).

12. The data augmentation-based object analysis model learning apparatus of claim 1, wherein the generating the second space image includes generating the second space image by calculating a value $(R_{max}\text{-}R_{AVG},G_{max}\text{-}G_{AVG},B_{max}\text{-}B_{AVG})$ by subtracting an element average value $(R_{AVG},G_{AVG},B_{AVG})$ of each of R, G, and B of a plurality of pixels from a maximum element value $(R_{max},G_{max},B_{max})$ among element values of each of R, G, and B of the plurality of pixels included in a size of an NxN matrix (N being a natural number equal to or greater than 3) including a first pixel at a center among pixels included in the first space image and, when any one of element values of the $(R_{max}\text{-}R_{AVG},G_{max}\text{-}G_{AVG},B_{max}\text{-}B_{AVG})$ is smaller than a preset value, performing an operation of blurring the first pixel.

13. The data augmentation-based object analysis model learning apparatus of claim 1, wherein the generating the second space image includes generating random number information based on standard Gaussian normal distribution with an average value of 0 and a standard deviation of 100 as much as a number of all pixels included in the first space image and generating the second space image into which noise is inserted by adding the random number information to each of the all pixels.

14. The data augmentation-based object analysis model learning apparatus of claim 1, wherein the generating the model includes setting a space image including an object image to an input layer of a neural network designed based on a faster region-based convolutional neural network (Faster R-CNN) algorithm, setting a bounding box including the object image and a class of the object image to an output layer, and learning a weight of a neural network for deriving a correlation of a region of the bounding box of the object image included in the space image, input from the input space image, and a correlation for determining a class of the object image included in the input space image.

15. An apparatus including a data augmentation-based object analysis model generated by the apparatus of any one of claims 1 to 14.

16. A method performed by a data augmentation-based object analysis learning apparatus, the method comprising:

acquiring a first space image including a first object image and generating a second space image by changing pixel information included in the first space image;

specifying a bounding box in a region including the first object image in the first space image and labeling a first class specifying the first object image in the bounding box;

primarily learning a weight of a model designed based on a predetermined object detection algorithm, for deriving a correlation between the first object image in the bounding box and the first class, by inputting the first space image to the model, specifying an object image included in a space image based on the correlation, and generating a model for determining a class;

inputting the second space image to the primarily learned model and labeling the bounding box specifying a second object image in the second space image by the model and a second class determined with respect to the second object image by the model, to the second space image; and

generating a model for secondarily learning the weight of the model based on the second space image.

17. A computer program recorded in a computer-readable recording medium for performing the method of claim 16 by a processor.

FIG 1

| Space Classification | Object Detection | Preference Analysis | Product Recommendation |
|---|---|---|---|

Report

This results of product recognition are derived as follows

FIG 2

FIG 3

```
                    ┌─────────────┐
                    │    START    │
                    └──────┬──────┘
                           │
                           ▼
┌──────────────────────────────────────────────────────┐
│  ACQUIRE FIRST SPACE IMAGE INCLUDING OBJECT IMAGE      │
│  AND GENERATE SECOND SPACE IMAGE BY CHANGING           │──S310
│  SOME OR ALL OF PIXEL INFORMATION INCLUDED             │
│  IN FIRST SPACE IMAGE                                  │
└──────────────────────────┬───────────────────────────┘
                           │
                           ▼
┌──────────────────────────────────────────────────────┐
│  SPECIFY BOUNDING BOX IN REGION OF FIRST OBJECT        │
│  IMAGE IN FIRST SPACE IMAGE AND LABEL FIRST CLASS      │──S320
│  SPECIFYING FIRST OBJECT IMAGE IN BOUNDING BOX         │
└──────────────────────────┬───────────────────────────┘
                           │
                           ▼
┌──────────────────────────────────────────────────────┐
│  INPUT FIRST SPACE IMAGE TO MODEL DESIGNED BASED       │
│  ON PREDETERMINED IMAGE CLASSIFICATION ALGORITHM       │
│  AND PRIMARILY LEARN WEIGHT OF MODEL FOR DERIVING      │
│  CORRELATION BETWEEN FIRST OBJECT IMAGE IN             │──S330
│  BOUNDING BOX AND FIRST CLASS TO SPECIFY OBJECT        │
│  IMAGE INCLUDED IN SPACE IMAGE AND TO DETERMINE        │
│  CLASS BASED ON CORRELATION                            │
└──────────────────────────┬───────────────────────────┘
                           │
                           ▼
┌──────────────────────────────────────────────────────┐
│  INPUT SECOND SPACE IMAGE TO PRIMARILY LEARNED         │
│  MODEL AND LABEL SECOND CLASS DETERMINED BY            │──S340
│  MODEL TO BOUNDING BOX SPECIFYING SECOND OBJECT        │
│  IMAGE IN SECOND SPACE IMAGE BY MODEL                  │
└──────────────────────────┬───────────────────────────┘
                           │
                           ▼
┌──────────────────────────────────────────────────────┐
│  GENERATE MODEL FOR SECONDARILY LEARNING WEIGHT        │──S350
│  OF MODEL BASED ON SECOND SPACE IMAGE                  │
└──────────────────────────┬───────────────────────────┘
                           │
                           ▼
                    ┌─────────────┐
                    │     END     │
                    └─────────────┘
```

FIG 4

FIRST SPACE IMAGE

AUGMENT LEARNING DATA
(S310)

LABELING(S320)

INPUT
(S340)

PRIMARILY
LEARN
(S330)

LABELED
FIRST SPACE IMAGE

DETERMINE FIRST SPACE IMAGE
CLASS AND
LABELING
(S340)

COMPARE
(TRUE/FALSE)
(S345)

SECONDARILY
LEARN
(S350)

LABELED
SECOND SPACE IMAGE

FIG 5

FIG 6

(a)

(b)

| before | after |
| R: 183, G: 191, B: 194 | R: 127, G: 147, B: 155 |

(c)

FIG 7

(a)

(b)

FIG 8

| 100 | 110 | 120 | 130 | 100 |
|------|------|------|------|------|
| 100 | 110 | 120 | 130 | 140 |
| 100 | 110 | 120 | 130 | 140 |
| 100 | 110 | 120 | 130 | 140 |
| 100 | 110 | 120 | 130 | 140 |

(a)

(b)

(c)

FIG 9

## INTERNATIONAL SEARCH REPORT

| International application No. |
|---|
| **PCT/KR2020/016741** |

| A. | CLASSIFICATION OF SUBJECT MATTER |
|---|---|

**G06N 20/00**(2019.01)i; **G06N 5/02**(2006.01)i; **G06T 19/00**(2011.01)i; **G06T 7/187**(2017.01)i; **G06T 7/11**(2017.01)i; **G06T 5/00**(2006.01)i; **G06T 19/20**(2011.01)i

According to International Patent Classification (IPC) or to both national classification and IPC

| B. | FIELDS SEARCHED |
|---|---|

Minimum documentation searched (classification system followed by classification symbols)

G06N 20/00(2019.01); G01N 21/88(2006.01); G06T 3/40(2006.01); G06T 5/00(2006.01); G06T 7/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 데이터(data), 증강(augmentation), 사물(object), 분석(analysis), 모델(model), 학습(learning), 이미지(image), 픽셀(pixel), 바운딩 박스(bounding box), 클래스(class), 레이블링(labeling), 가중치(weight), 상관관계(correlation)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 6612487 B1 (RAKUTEN, INC.) 27 November 2019 (2019-11-27)<br>See paragraphs [0001], [0006], [0038] and [0054]-[0057]; and figures 1-2. | 1-11,13-17 |
| A | | 12 |
| Y | KR 10-2020-0078214 A (SAMSUNG ELECTRONICS CO., LTD.) 01 July 2020 (2020-07-01)<br>See paragraphs [0042]-[0043]; and figure 1. | 1-11,13-17 |
| A | JP 2018-169672 A (MITSUBISHI ELECTRIC INFORMATION SYSTEMS CORP.) 01 November 2018 (2018-11-01)<br>See paragraphs [0009]-[0047]; and figures 1-2. | 1-17 |
| A | KR 10-2018-0004824 A (VUNO INC.) 12 January 2018 (2018-01-12)<br>See paragraphs [0019]-[0079]; and figures 1-7. | 1-17 |

| ✓ | Further documents are listed in the continuation of Box C. | ✓ | See patent family annex. |
|---|---|---|---|

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 April 2021** | **05 April 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
| --- |
| **PCT/KR2020/016741** |

| C. | DOCUMENTS CONSIDERED TO BE RELEVANT | |
| --- | --- | --- |
| Category* | Citation of document, with indication, where appropriate, of the relevant passages | Relevant to claim No. |
| A | JP 2006-048370 A (KAGAWA UNIV. et al.) 16 February 2006 (2006-02-16)<br>See paragraphs [0028]-[0031]; and figures 6-7. | 1-17 |

Form PCT/ISA/210 (second sheet) (July 2019)

**INTERNATIONAL SEARCH REPORT**
Information on patent family members

International application No.

**PCT/KR2020/016741**

| Patent document cited in search report | | | Publication date (day/month/year) | Patent family member(s) | | | Publication date (day/month/year) |
|---|---|---|---|---|---|---|---|
| JP | 6612487 | B1 | 27 November 2019 | WO | 2020-240809 | A1 | 03 December 2020 |
| KR | 10-2020-0078214 | A | 01 July 2020 | WO | 2020-130747 | A1 | 25 June 2020 |
| JP | 2018-169672 | A | 01 November 2018 | JP | 6441980 | B2 | 19 December 2018 |
| KR | 10-2018-0004824 | A | 12 January 2018 | KR | 10-1880035 | B1 | 19 July 2018 |
| | | | | US | 2017-0256038 | A1 | 07 September 2017 |
| | | | | WO | 2017-051943 | A1 | 30 March 2017 |
| JP | 2006-048370 | A | 16 February 2006 | | None | | |

Form PCT/ISA/210 (patent family annex) (July 2019)